# NOUVEAU FASCICULE DE BREVET EUROPEEN

(11) **EP 1 382 271 B2**
(45) Date de publication et mention de la décision concernant l'opposition: **14.04.2010**
(45) Mention de la délivrance du brevet: 11.10.2006
(21) Numéro de dépôt: 03291547.2
(22) Date de dépôt: 24.06.2003
(51) Int. Cl.: A45D 19/02, A45D 24/26, A45D 24/22

(54) **Embout applicateur et ensemble de conditionnement et d'application pour l'application d'un produit cosmétique comprenant un tel embout**
Applikatoraufsatz und Vorrichtung zum Aufbewahren und Auftragen eines kosmetischen Produkts welches einen solche Aufsatz umfasst
Dispenser head, packaging and applicator assembly for the application of a cosmetic product comprising such a dispenser head

(30) Priorité: 17.07.2002 FR 0209035; 17.07.2002 FR 0209034
(43) Date de publication de la demande: 21.01.2004
(73) Titulaire: L'Oréal SA, 75008 Paris (FR)
(72) Inventeur: De Laforcade, Vincent, 78120 Rambouillet (FR); Bonneyrat, Philippe, 95220 Herblay (FR)
(74) Mandataire: Leray, Noelle

(56) Documents cités:
- WO-A1-99/26509
- DE-A- 19 954 450
- DE-U- 9 419 660
- JP-A- 2002 136 332
- US-A- 3 863 650
- US-A- 3 961 635
- US-A- 4 605 026
- US-A1- 2001 029 960
- US-B1- 6 260 557

## Description

L'invention concerne un ensemble de conditionnement et d'application d'un produit cosmétique comportant un embout applicateur destiné à permettre l'application d'un produit cosmétique dans une chevelure.

L'invention concerne plus particulièrement un embout applicateur destiné à être monté sur un récipient contenant un produit cosmétique à appliquer sur les cheveux, ledit embout comprenant :
a) des moyens destinés à la fixation de l'embout sur le récipient ;
b) un arrangement d'au moins deux dents disposées selon au moins une rangée comprenant des première et seconde dents d'extrémité, au moins une des dents étant traversée par un canal longitudinal apte à communiquer avec le produit contenu dans le récipient, ledit canal débouchant latéralement via au moins un orifice de sortie orienté en direction d'au moins une dent adjacente.

On connaît de nombreux exemples d'embouts applicateurs de ce type.

Selon une première conception connue, il a été proposé un embout constitué de plusieurs pièces moulées, notamment au moins une première pièce comportant deux dents longitudinales d'extrémité transversale et des moyens de fixation au récipient, et au moins une deuxième pièce intermédiaire, destinée à être assemblée à la précédente, qui comporte des dents intermédiaires creuses munies d'orifices latéraux de sortie.

Cette conception est d'une mise en oeuvre onéreuse, car d'une part elle nécessite l'utilisation de deux ensembles de moules distincts, l'un pour la première pièce et l'autre pour la deuxième pièce intermédiaire, et car d'autre part les première et deuxième pièces doivent être assemblées l'une à l'autre, ce qui augmente les coûts de fabrication d'un tel embout applicateur.

Le document DE9419660 décrit un embout applicateur.

Selon une seconde conception connue, il a été proposé un embout constitué d'une seule pièce moulée. La pièce moulée est obtenue à l'aide d'un moule destiné à former la paroi extérieure de l'embout applicateur et d'un premier noyau destiné à former les canaux des dents creuses, un second noyau amovible traversant transversalement l'intégralité du moule et du premier noyau pour former les orifices latéraux de sortie. Le résultat en est un embout applicateur dont les dents d'extrémité, nécessairement traversées par le second noyau lors du moulage, comportent des orifices latéraux de sortie sur leurs flancs latéraux. De ce fait, un tel embout applicateur est d'un usage imprécis, voire salissant, car le produit cosmétique s'écoule en bavart sur les flancs latéraux extérieurs des dents d'extrémité transversales.

Les documents US6260557 et DE19954450 décrivent également des embouts réalisés d'une seule pièce. Dans ces deux documents, les dents d'extrémité comportent des orifices de sortie. En outre, dans ces deux documents, les orifices débouchent sur les flancs lisses des dents. De ce fait, le produit, en sortant des orifices de sortie, se répartit aléatoirement entre les dents sans suivre de direction particulière et glisse le long des dents indépendamment de sa viscosité, de sorte que le produit risque d'atteindre le cuir chevelu sans imprégner convenablement la partie de la chevelure comprise entre deux dents adjacentes.

Dans le document DE9419660, les orifices débouchent dans une rainure qui s'étend jusqu'à l'extrémité libre de la dent. L'orifice débouche au niveau de cette extrémité libre de la dent.

L'invention remédie au moins en partie aux inconvénients de la technique antérieure en proposant un embout applicateur du type décrit précédemment tel que revendiqué en 1 et 14.

L'arrangement peut être formé de moulage à partir d'une seule pièce et configuré de manière à faire obstacle à tout écoulement de produit depuis ledit orifice de sortie, selon la direction de ce dernier, au-delà desdites première et seconde dents d'extrémité, l'orifice débouchant dans une rainure s'étendant longitudinalement à ladite dent depuis ledit orifice de sortie jusqu'à l'extrémité libre de ladite dent.

Les rainures sont destinées d'une part à canaliser le produit cosmétique et d'autre part à ralentir par capillarité les gouttes de produit jusqu'à l'extrémité des dents pour éviter que le produit n'atteigne le cuir chevelu.

L'arrangement peut être formé de moulage à partir d'une seule pièce et configuré de manière à faire obstacle à tout écoulement de produit depuis ledit orifice de sortie, selon la direction de ce dernier, au-delà desdites première et seconde dents d'extrémité, les dents d'extrémité étant dépourvues d'orifices de sortie.

Selon d'autres caractéristiques de l'invention :
- l'arrangement peut comprendre au moins une dent intermédiaire disposée entre lesdites première et seconde dents d'extrémité, ladite dent intermédiaire étant traversée par un canal débouchant latéralement via au moins un orifice de sortie orienté en direction d'une dent adjacente ;
- la (ou les) dent(s) intermédiaire(s) peut(vent) être traversée(s) par un canal longitudinal débouchant via deux orifices de sortie orientés à l'opposé l'un de l'autre ;
- les dents longitudinales d'extrémité peuvent être pleines ;
- ledit orifice de sortie peut être agencé à proximité de l'extrémité libre de la dent, ce qui signifie que l'orifice de sortie est agencé plus près de l'extrémité libre de la dent que de sa base ;
- les moyens de fixation peuvent être constitués d'un filetage et destinés à coopérer avec un filetage correspondant prévu sur un col du récipient.

L'invention concerne aussi un ensemble de conditionnement et d'application d'un produit cosmétique, qui peut comporter un récipient équipé d'un tel embout applicateur.

L'invention concerne aussi un moule pour le moulage d'un embout applicateur tel que décrit précédemment, qui peut comporter:
- un élément femelle qui comporte:
   - une première portion, destinée à former au moins en partie les moyens de fixation,
   - au moins une deuxième portion qui s'étend à partir de la première portion, qui est destinée à former au moins une dent,
- un élément mâle formant noyau, dont une première partie est reçue avec jeu dans la première portion de l'élément femelle pour former les moyens de fixation, et dont au moins une deuxième partie est reçue avec jeu dans la deuxième portion de l'élément femelle pour former le canal longitudinal d'une dent creuse, la deuxième partie de l'élément mâle et la deuxième portion de l'élément femelle étant conformées de manière à coopérer pour former la rainure et l'orifice de sortie d'une dent creuse, la rainure (26) comportant une première extrémité et une seconde extrémité située à l'extrémité libre de ladite dent, l'orifice (20) débouchant dans la rainure au niveau de sa première extrémité.

Selon d'autres caractéristiques du moule :
- au moins un flanc latéral interne d'une deuxième portion de l'élément femelle peut comporter un bossage d'orientation longitudinale faisant saillie à l'intérieur de la deuxième portion de l'élément femelle et s'étendant longitudinalement entre une partie intermédiaire de la deuxième portion de l'élément femelle et son extrémité pour former la rainure et une partie d'un orifice de sortie d'une dent creuse,
- une extrémité d'une deuxième partie de l'élément mâle associée à ladite deuxième portion de l'élément femelle peut être destinée à coïncider sans jeu avec l'extrémité du bossage situé dans la partie intermédiaire de ladite deuxième portion de l'élément femelle pour former l'autre partie de l'orifice de sortie de ladite dent creuse ;
- l'élément femelle peut comporter :
   - deux deuxièmes portions d'extrémité, qui s'étendent à partir de la première portion de l'élément femelle, et qui sont destinées à former les dents pleines d'extrémité de l'embout applicateur, et
   - au moins une deuxième portion intermédiaire, agencée entre les deuxièmes portions d'extrémité de l'élément femelle, qui s'étend à partir de la première portion de l'élément femelle, et destinée à former au moins une dent creuse intermédiaire, dont les flancs latéraux internes opposés comportent des bossages pour former deux rainures opposées et une partie de deux orifices de sortie opposés de ladite dent creuse intermédiaire,
- et une extrémité de chaque deuxième partie de l'élément mâle associée à une deuxième portion intermédiaire de l'élément femelle peut être destinée à s'emboîter sans jeu entre les extrémités des bossages situées dans la partie intermédiaire de chaque deuxième portion intermédiaire de l'élément femelle pour former l'autre partie des orifices de ladite dent creuse intermédiaire ;
- la section de chaque bossage, prise dans un plan perpendiculaire à la direction longitudinale de la deuxième portion de l'élément femelle associée, peut être constante, ou bien minimale au voisinage de son extrémité inférieure située dans la partie intermédiaire de chaque deuxième portion de l'élément femelle, pour permettre le démoulage de la dent creuse associée ;
- l'élément femelle et l'élément mâle peuvent comporter chacun des moyens de centrage qui sont destinés à coopérer l'un avec l'autre lors de l'assemblage du moule ;
- les moyens de centrage peuvent comporter au moins trois colonnes de guidage d'orientation longitudinale, qui sont solidaires d'un des éléments mâle/femelle, et sur lesquelles l'autre élément femelle/mâle est susceptible de coulisser lors de l'assemblage du moule.

L'invention concerne enfin un procédé de moulage d'un embout applicateur pour un ensemble de conditionnement et d'application d'un produit cosmétique à l'aide d'un moule tel que précédemment décrit qui peut comporter :
- une première étape au cours de laquelle l'élément femelle est emboîté sur l'élément mâle,
- une deuxième étape au cours de laquelle un matériau polymère est injecté entre les éléments femelle et mâle,
- une troisième étape de polymérisation du matériau polymère,
- une quatrième étape au cours de laquelle l'élément femelle est déboîté de l'élément mâle et au cours de laquelle l'embout applicateur est éjecté du moule.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un ensemble de conditionnement et d'application d'un produit cosmétique comprenant un récipient et un embout applicateur suivant l'invention ;
- la figure 2 est une vue en coupe d'un embout applicateur, suivant la direction transversale de la rangée de dents de l'embout applicateur selon la figure 1 ;
- la figure 3 est une vue en perspective avec arrachement par un plan longitudinal et transversal d'un moule selon l'invention ;
- la figure 4 est une vue de détail en coupe par un plan perpendiculaire à la direction transversale d'un moule selon l'invention ;
- la figure 5 est une vue de détail en coupe par un plan longitudinal et transversal d'un moule selon l'invention.

Dans la description qui va suivre, des chiffres de référence identiques désignent des pièces identiques ou ayant des fonctions similaires.

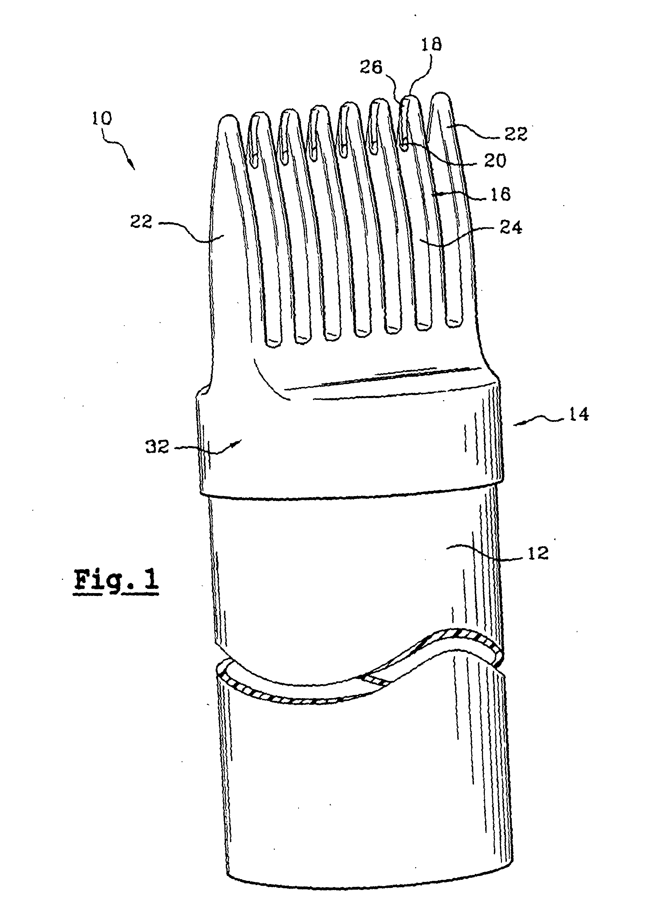

Par convention, les termes "avant", "arrière", supérieur", "inférieur" désignent respectivement des éléments ou des positions orientés respectivement vers la gauche, la droite, le haut, ou le bas des figures 1 à 5.

On a représenté à la figure 1 un ensemble 10 de conditionnement et d'application d'un produit cosmétique, par exemple un produit cosmétique qui est destiné à être appliqué dans une chevelure tel qu'un produit colorant.

De manière connue, l'ensemble 10 comporte un récipient 12 contenant le produit cosmétique et un embout applicateur 14, fixé au récipient 12 par l'intermédiaire de moyens de fixation.

Le récipient 12 est par exemple un récipient souple ou déformable, tel qu'un tube, qu'il suffit de presser pour amener le produit cosmétique à s'acheminer dans le canal interne et à sortir par l'orifice de sortie 20.

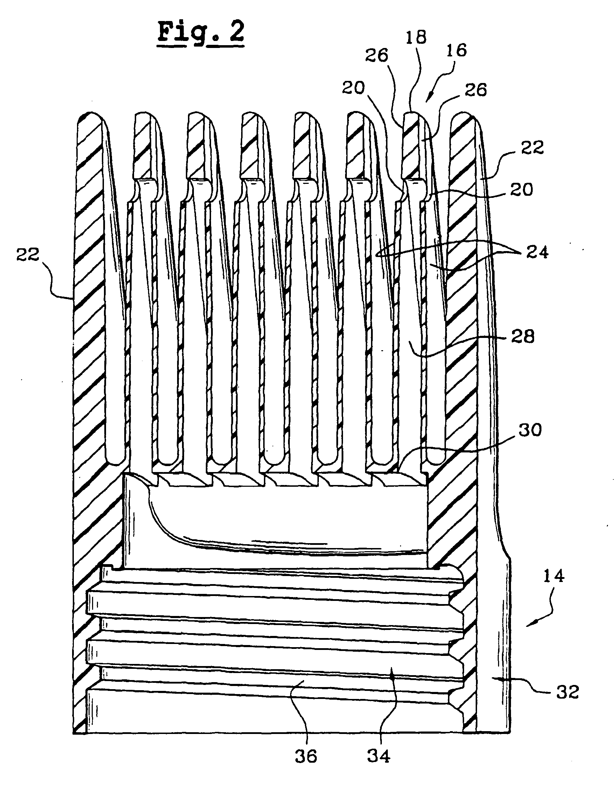

Un exemple non limitatif de réalisation d'un embout applicateur 14 va à présent être décrit en référence à la figure 2.

L'embout 14 comporte un arrangement de dents longitudinales disposées selon une rangée transversale. La rangée comporte :
- à ses extrémités transversales, au moins deux dents 22 longitudinales pleines, et
- entre les dents pleines 22, au moins une dent 16 longitudinale creuse intermédiaire qui est traversée par un canal interne 28 qui communique avec le produit contenu dans le récipient 12 et qui débouche à proximité de l'extrémité longitudinale 18 de la dent 16 par l'intermédiaire d'au moins un orifice 20 latéral de sortie.

Conformément à l'invention, l'arrangement de dents est configuré de manière à faire obstacle à tout écoulement de produit depuis l'orifice de sortie 20, selon la direction de ce dernier, au-delà desdites première et seconde dents d'extrémité 22.

Ainsi, pratiquement la totalité du produit à appliquer s'écoule dans l'espace délimité par les première et seconde dents d'extrémité 22, garantissant une précision de l'application du produit.

Pour cela, les première et seconde dents d'extrémité 22 sont dépourvues d'orifices de sortie 20 sur leurs flancs extérieurs, c'est-à-dire sur leurs flancs opposés aux dents intermédiaires 16.

De ce fait, le produit sortant par les orifices 20 ne s'écoule pas dans la direction des orifices 20 au-delà des première et seconde dents d'extrémité 22. Ainsi, seul le produit qui a déjà été appliqué sur les cheveux qui viennent en contact avec les flancs extérieurs des dents d'extrémité coule alors sur les flancs.

Selon une variante de réalisation de l'invention, les première et seconde dents d'extrémité 22 sont aussi dépourvues d'orifices de sortie 20 sur leurs flancs intérieurs tournés vers les dents intermédiaires 16, c'est-à-dire qu'elles sont dépourvues d'orifices de sortie 20. Ainsi, le produit ne s'écoule pas des première et seconde dents d'extrémité 22, il ne peut donc pas couler sur leurs flancs extérieurs.

Par ailleurs, puisque le produit ne s'écoule pas des première et seconde dents d'extrémité 22, celles-ci sont pleines, ce qui permet en plus d'éviter toute accumulation de produit dans le canal 28.

Ainsi, des orifices de sorties 20 sont au moins agencés sur les dents intermédiaires 16, notamment sur chaque flanc tourné vers la dent 22 longitudinale pleine associée.

Une rainure 26 longitudinale s'étend à partir de chaque orifice 20 latéral, jusqu'à l'extrémité 18 de la dent 16, pour permettre notamment une application uniforme du produit cosmétique. La rainure 26 comporte une première extrémité au niveau de laquelle débouche l'orifice de sortie 20 et une seconde extrémité, opposée à la première, et qui correspond à l'extrémité libre de la dent.

Dans le mode de réalisation de l'invention qui a été représenté à la figure 1, l'embout applicateur 14 comporte six dents 16 creuses intermédiaires qui sont agencées transversalement entre ses deux dents 22 pleines d'extrémité, de manière à permettre une large application du produit cosmétique dans les cheveux à traiter. Cette disposition n'est pas limitative de l'invention, et l'embout applicateur pourrait comporter un nombre supérieur ou inférieur de dents 16 creuses.

L'embout applicateur 14 a été représenté plus en détail à la figure 2. Comme on peut le voir, chaque dent creuse 16 comporte un canal interne 28 qui s'étend entre la base 30 de la dent 16 et une partie intermédiaire de la dent agencée en retrait de son extrémité 18, et qui communique avec deux orifices 20 de sortie agencés sur chaque flanc 24 de la dent. Chaque orifice 20 de sortie communiquant à l'extérieur de la dent avec une rainure 26 associée, cette configuration permet de réserver une longueur de rainure propre à assurer une dispersion optimale du produit capillaire entre deux dents 16 voisines, de sorte que des cheveux qui sont intercalés entre deux dents 16 voisines peuvent être largement recouverts dudit produit cosmétique, le produit cosmétique présentant en effet des caractéristiques de viscosité qui tendent à former un film de produit cosmétique tendu entre les rainures 26 en regard de deux dents 16 voisines.

A titre d'exemple, chaque dent 16, 22 mesure 25mm, les dents 16, 22 sont espacées de 2mm en dessous des orifices 20, et chaque orifice 20 des dents creuses 16, agencé à l'extrémité inférieure de la rainure 26, est distant de 5mm de l'extrémité de ladite dent. La rainure 26 est profonde de 0.5mm.

Chaque rainure 26 permet donc de guider le produit cosmétique selon la direction de ladite rainure entre les dents 16. De plus, chaque rainure 26, de par sa profondeur qui augmente l'espace libre entre deux dents adjacentes, permet de ralentir par capillarité la descente des gouttes de produit pour permettre au produit d'imprégner les cheveux sans atteindre le cuir chevelu.

Comme l'illustre la figure 1, l'embout applicateur 14 comporte par ailleurs une partie 32 femelle sensiblement cylindrique à partir de laquelle s'étendent les dents creuses 16 et pleines 22 et qui comporte les moyens de fixation à un col (non représenté) du récipient 12. Comme l'illustre plus particulièrement la figure 2, une cavité interne 34 de la partie cylindrique 32 communique avec les canaux internes 28 des dents intermédiaires 16 creuses et est destinée à coïncider avec le col (non représenté) du récipient 12 précédemment représenté à la figure 1.

Dans le mode de réalisation préféré de l'invention la cavité interne 34 est, tout comme la partie inférieure 32, cylindrique, et elle comporte un filetage 36 qui est destiné à coopérer avec un filetage (non représenté) porté par la périphérie du col du récipient 12 pour former les moyens de fixation. Cette configuration permet d'assembler facilement l'embout applicateur 14 au récipient 12.

On remarquera que cette disposition n'est pas limitative de l'invention. L'embout applicateur 14 pourrait être fixé par tous moyens connus au récipient 12, par exemple par emboîtement.

Avantageusement, l'embout applicateur 14 est réalisé à partir d'une seule pièce par un procédé de moulage.

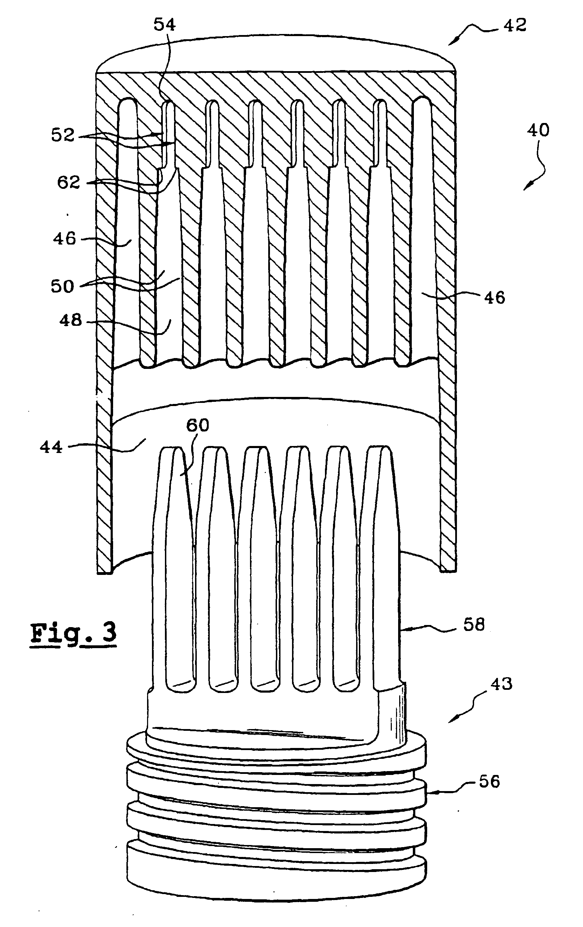

Les figures 3 à 5 représentent un moule 40 pour le moulage d'un embout applicateur 14 tel que décrit précédemment.

Comme l'illustrent les figures 3 à 5, le moule 40 comporte un élément 42 femelle monobloc et un élément 43 mâle monobloc formant un noyau.

Comme l'illustre la figure 3, l'élément 42 femelle monobloc comporte :
- une première portion 44 inférieure, destinée à former la partie 32 sensiblement cylindrique de l'embout applicateur 14,
- deux portions 46 supérieures, qui s'étendent à partir de la portion 44 inférieure, et qui sont destinées à former les dents 22 pleines agencées aux extrémités transversales de l'embout applicateur 14, et
- au moins une deuxième portion 48 supérieure intermédiaire, agencée entre les portions 46 supérieures, qui s'étend à partir de la portion inférieure 44, qui est destinée à former les dents creuses 16, dont les flancs latéraux internes 50 comportent des bossages 52 d'orientation longitudinale faisant saillie à l'intérieur de la portion 48 supérieure intermédiaire et s'étendant longitudinalement entre une partie intermédiaire de la portion 48 supérieure intermédiaire et son extrémité supérieure 54 pour former la rainure 26 et une partie des orifices de sortie 20.

L'élément 43 mâle monobloc formant un noyau comporte une partie inférieure 56, qui est reçue avec jeu dans la portion 44 inférieure de l'élément femelle pour former la cavité 34 interne de la partie 32 cylindrique, et dont au moins une partie supérieure 58 est reçue avec jeu dans la portion 48 intermédiaire supérieure de l'élément femelle pour former le canal 28 interne de la dent intermédiaire 16.

De plus, la deuxième portion 48 supérieure intermédiaire de l'élément femelle 42 et la partie supérieure intermédiaire 58 de l'élément mâle 43 sont conformées pour former l'orifice de sortie 20 de la dent intermédiaire 16 par coopération.

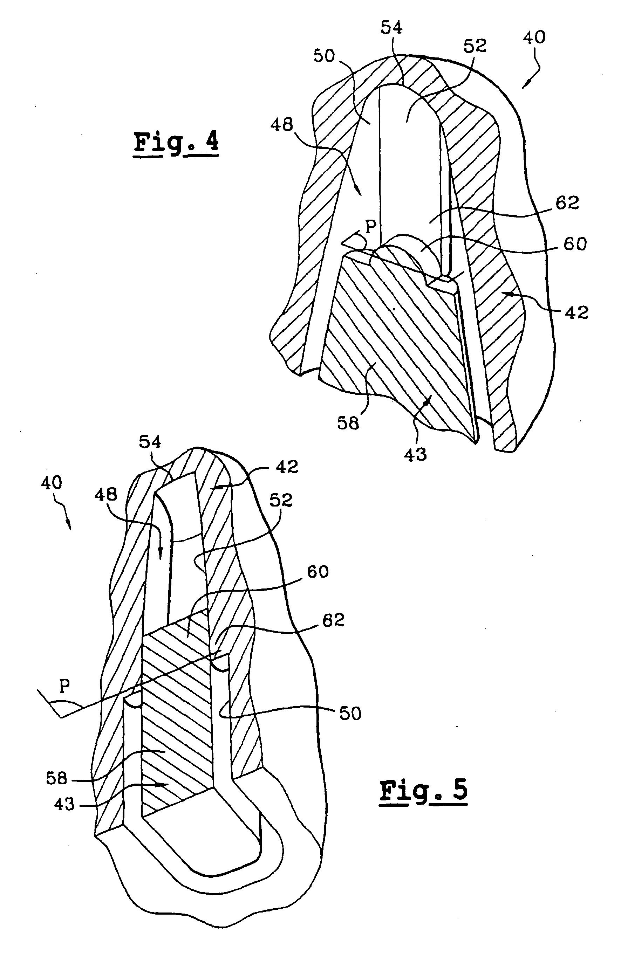

Plus particulièrement, comme l'illustrent les figures 4 et 5, une extrémité 60 de chaque partie supérieure 58 de l'élément 43 mâle est destinée à s'emboîter sans jeu entre les extrémités 62 des bossages 52 situées dans la partie intermédiaire de chaque portion 48 supérieure intermédiaire de l'élément 42 femelle pour former les orifices 20 de sortie de la dent 16 intermédiaire.

Avantageusement, la section de chaque bossage 52, prise dans un plan "P" perpendiculaire à la direction longitudinale de la portion 48 supérieure intermédiaire de l'élément femelle associée, est constante, ou bien est minimale au voisinage de son extrémité inférieure 62 située dans la partie intermédiaire de chaque portion 48 supérieure intermédiaire de l'élément femelle, pour permettre, comme on le verra ultérieurement, le démoulage de la dent 16 intermédiaire associée par un mouvement de translation verticale vers le haut de l'élément 42 femelle.

Il sera compris que l'élément 42 femelle monobloc et l'élément 43 mâle monobloc comportent chacun des moyens de centrage qui sont destinés à coopérer l'un avec l'autre lors de l'assemblage du moule 40.

Ces moyens sont au moins constitués de l'extrémité supérieure 60 de chaque partie supérieure 58 de l'élément 43 mâle coopérant avec les extrémités 62 des bossages 52 situées dans la partie intermédiaire de chaque portion 48 supérieure intermédiaire de l'élément femelle mais ils sont aussi constitués de moyens de centrage extérieurs aux portions de l'élément 42 femelle.

En particulier, les moyens de centrage comportent au moins trois colonnes (non représentées) de guidage d'orientation longitudinale, qui sont solidaires d'un des éléments 42, 43 mâle/femelle monobloc, et sur lesquelles l'autre élément 42, 43 femelle/mâle monobloc est susceptible de coulisser lors de l'assemblage du moule 40.

Dans le mode de réalisation préféré de l'invention, le moule 40 permettant de réaliser un grand nombre d'embouts applicateurs 14 en une seule opération de moulage et comportant donc des éléments 42, 43 mâle/femelle monoblocs définissant un grand nombre d'empreintes, les moyens de centrage comportent quatre colonnes agencées aux quatre coins d'un des éléments 42, 43 mâle/femelle monobloc, et sur lesquelles l'autre élément 42, 43 femelle/mâle monobloc est susceptible de coulisser lors de l'assemblage du moule 40.

Dans cette configuration, un procédé de moulage d'un embout applicateur 14 tel que décrit précédemment utilisant un moule 40 tel que décrit précédemment comporte successivement une première étape au cours de laquelle l'élément 42 femelle est emboîté longitudinalement, et de préférence verticalement, sur l'élément 43 mâle, une deuxième étape au cours de laquelle un matériau polymère est injecté dans l'empreinte définie par les éléments femelle et mâle 42, 43, une troisième étape de polymérisation du matériau polymère, et une quatrième étape au cours de laquelle l'élément 42 femelle est déboîté longitudinalement de l'élément 43 mâle et au cours de laquelle le ou les embouts applicateurs 14 sont éjectés du moule.

Tous les moyens connus peuvent être utilisés afin de provoquer l'éjection du ou des embouts applicateurs 14. En particulier, des méthodes d'éjection par vibration ou pas soufflage d'air comprimé peuvent être utilisées afin d'éjecter rapidement les embouts applicateurs 14.

L'invention permet donc de proposer un ensemble 10 de conditionnement et d'application propre à assurer efficacement l'application d'un produit cosmétique dans des cheveux, qui est de surcroît d'une grande facilité de fabrication dans le cadre d'une production de grande série.

Dans toute la description, y compris les revendications, il sera compris que l'expression "comportant un" est synonyme de "comportant au moins un ", sauf si le contraire est spécifié.

## Revendications

1. Embout applicateur (14) destiné à être monté sur un récipient (12) contenant un produit à appliquer sur les cheveux, ledit embout comprenant :
a) des moyens destinés à la fixation de l'embout (14) sur le récipient (12) ;
b) un arrangement d'au moins deux dents (16, 22) disposées selon au moins une rangée comprenant des première et seconde dents d'extrémité (22), au moins une dent intermédiaire (16) disposée entre lesdites première et seconde dents d'extrémité (22) étant traversée par un canal (28) longitudinal apte à communiquer avec le produit contenu dans le récipient (12), ledit canal (28) débouchant latéralement via au moins un orifice (20) de sortie orienté en direction d'au moins une dent adjacente (16, 22), ladite dent comportant une rainure (26) s'étendant longitudinalement à ladite dent (16), la rainure (26) comportant une première extrémité et une seconde extrémité située à l'extrémité libre de ladite dent (16), **caractérisé en ce que** l'orifice (20) débouche dans une rainure au niveau de sa première extrémité, et **en ce que** seules les première et seconde dents d'extrémité sont dépourvues d'orifices de sortie.

2. Embout applicateur selon la revendication 1, **caractérisé en ce que** la (ou les) dent(s) intermédiaire(s) (16) est (sont) traversée(s) par un canal (28) longitudinal débouchant via deux orifices (20) de sortie orientés à l'opposé l'un de l'autre.

3. Embout applicateur (14) selon l'une quelconque des revendications précédentes, **caractérisé en ce que** les dents (22) d'extrémité sont pleines.

4. Embout applicateur (14) selon l'une quelconque des revendications précédentes, **caractérisé en ce que** ledit orifice (20) de sortie est agencé à proximité de l'extrémité libre de la dent (16).

5. Embout applicateur (14) selon l'une quelconque des revendications précédentes, **caractérisé en ce que** les moyens de fixation sont constitués d'un filetage (36) et sont destinés à coopérer avec un filetage correspondant prévu sur un col du récipient (12).

6. Ensemble de conditionnement et d'application d'un produit cosmétique, **caractérisé en ce qu'**il comporte un récipient (12) équipé d'un embout applicateur (14) selon l'une quelconque des revendications 1 à 5.

7. Moule (40) pour le moulage d'un embout applicateur (14) selon les revendications 1 à 5, **caractérisé en ce qu'**il comporte :
- un élément (42) femelle qui comporte:
• une première portion (44), destinée à former au moins en • partie les moyens de fixation,
• au moins une deuxième portion (46, 48) qui s'étend à partir de la première portion (44), et destinée à former au moins une dent (16,22),
- un élément (43) mâle formant noyau, dont une première partie (56) est reçue avec jeu dans la première portion (44) de l'élément femelle pour former les moyens de fixation, et dont au moins une deuxième partie (58) est reçue avec jeu dans la deuxième portion (48) de l'élément femelle pour former le canal (28) longitudinal d'une dent (16) creuse, la deuxième partie (58) de l'élément mâle (43) et la deuxième portion (48) de l'élément femelle étant conformées de manière à coopérer pour former la rainure (26) et l'orifice (20) de sortie d'une dent creuse (16).

8. Moule (40) selon la revendication précédente, **caractérisé en ce que** :
- au moins un flanc (50) latéral interne d'une deuxième portion (48) de l'élément femelle comporte un bossage (52) d'orientation longitudinale faisant saillie à l'intérieur de la deuxième portion (48) de l'élément femelle et s'étendant longitudinalement entre une partie intermédiaire de la deuxième portion (48) de l'élément femelle et son extrémité (54) pour former la rainure (26) et une partie d'un orifice (20) de sortie d'une dent (16) creuse,
- une extrémité (60) d'une deuxième partie (58) de l'élément (43) mâle associée à ladite deuxième portion (48) de l'élément femelle est destinée à coïncider sans jeu avec l'extrémité (62) du bossage (52) situé dans la partie intermédiaire de ladite deuxième portion (48) de l'élément (42) femelle pour former l'autre partie de l'orifice (20) de sortie de ladite dent (16) creuse.

9. Moule (40) selon l'une des revendications 7 ou 8 pour le moulage d'un embout (14) applicateur pour l'application d'un produit cosmétique selon les revendications 1 à 5, **caractérisé en ce que** :
- l'élément (42) femelle comporte:
• deux deuxièmes portions (46) d'extrémité, qui s'étendent à partir de la première portion (44) de l'élément femelle, et qui sont destinées à former les dents (22) pleines d'extrémité de l'embout applicateur (14), et
• au moins une deuxième portion (48) intermédiaire, agencée entre les deuxièmes portions (46) d'extrémité de l'élément femelle, qui s'étend à partir de la première portion (44) de l'élément femelle, qui est destinée à former au moins une dent (16) creuse intermédiaire, dont les flancs (50) latéraux internes opposés comportent des bossages (52) pour former deux rainures (26) opposées et une partie de deux orifices (20) de sortie opposés de ladite dent (16) creuse intermédiaire,
- et **en ce que** une extrémité (60) de chaque deuxième partie (58) de l'élément (43) mâle associée à une deuxième portion intermédiaire (48) de l'élément femelle est destinée à s'emboîter sans jeu entre les extrémités (62) des bossages (52) situées dans la partie intermédiaire de chaque deuxième portion (48) intermédiaire de l'élément (42) femelle pour former l'autre partie des orifices (20) de ladite dent (16) creuse intermédiaire.

10. Moule (40) selon l'une quelconque des revendications 8 ou 9, **caractérisé en ce que** la section de chaque bossage (52), prise dans un plan (P) perpendiculaire à la direction longitudinale de la deuxième portion (48) associée de l'élément femelle, est constante, ou bien est minimale au voisinage de son extrémité (62) située dans la partie intermédiaire de chaque deuxième portion (48) de l'élément femelle, pour permettre le démoulage de la dent (16) creuse associée.

11. Moule (40) selon l'une des revendications 7 à 10, **caractérisé en ce que** l'élément (42) femelle et l'élément (43) mâle comportent chacun des moyens de centrage qui sont destinés à coopérer l'un avec l'autre lors de l'assemblage du moule (40).

12. Moule (40) selon la revendication précédente, **caractérisé en ce que** les moyens de centrage comportent au moins trois colonnes de guidage d'orientation longitudinale, qui sont solidaires d'un des éléments (42, 43) mâle/femelle, et sur lesquelles l'autre élément (42, 43) femelle/mâle est susceptible de coulisser lors de l'assemblage du moule (40).

13. Procédé de moulage d'un embout applicateur (14) selon les revendications 1 à 5 à l'aide d'un moule (40) selon l'une des revendications 7 à 8, **caractérisé en ce qu'**il comporte :
- une première étape au cours de laquelle l'élément (42) femelle est emboîté sur l'élément (43) mâle,
- une deuxième étape au cours de laquelle un matériau polymère est injecté entre les éléments (42, 43) femelle et mâle,
- une troisième étape de polymérisation du matériau polymère,
- une quatrième étape au cours de laquelle l'élément (42) femelle est déboîté de l'élément (43) mâle et au cours de laquelle l'embout applicateur (14) est éjecté du moule (40).

14. Embout applicateur (14) destiné à être monté sur un récipient (12) contenant un produit à appliquer sur les cheveux, ledit embout comprenant :
a) des moyens destinés à la fixation de l'embout (14) sur le récipient (12) :
b) un arrangement d'au moins deux dents (16, 22) disposées selon au moins une rangée comprenant des première et seconde dents d'extrémité (22), au moins une des dents intermédiaire (16) disposée entre lesdites première et seconde dents d'extrémité (22) étant traversée par un canal (28) longitudinal apte à communiquer avec le produit contenu dans le récipient (12), ledit canal (28) débouchant latéralement via au moins un orifice (20) de sortie orienté en direction d'au moins une dent adjacente (16, 22), ladite dent comportant une rainure (26) s'étendant longitudinalement à ladite dent (16), la rainure (26) comportant une première extrémité et une seconde extrémité située à l'extrémité libre de ladite dent (16), **caractérisé en ce que** l'orifice (20) débouche dans une rainure au niveau de sa première extrémité et **en ce que** les première et seconde dents d'extrémité sont pourvues d'orifice de sortie, ces orifices n'étant pas pourvus sur les flancs extérieurs de ces dents d'extrémités.

## Claims

1. Dispenser head (14) designed to be fitted to a container (12) containing a product to be applied to the hair, said head comprising:
a) means for fastening the head (14) on the container (12);
b) an arrangement of at least two teeth (16, 22) disposed in at least one row comprising first and second end teeth (22), at least one intermediate tooth (16) positioned between said first and second end teeth (22) being passed through by a longitudinal channel (28) able to communicate with the product contained in the container (12), said channel (28) emerging laterally via at least one outlet orifice (20) facing at least one adjacent tooth (16, 22), said tooth comprising a groove (26) running longitudinally along said tooth (16), the groove (26) comprising a first end and a second end located at the tip of said tooth (16), **characterized in that** the orifice (20) emerges in a groove at its first end, and **in that** only the first and second end teeth have no outlet orifices.

2. Dispenser head according to Claim 1, **characterized in that** the intermediate tooth or teeth (16) is/are passed through by a longitudinal channel (28) emerging via two outlet orifices (20) facing away from each other.

3. Dispenser head (14) according to either of the preceding claims, **characterized in that** the end teeth (22) are solid.

4. Dispenser head (14) according to any one of the preceding claims, **characterized in that** said outlet orifice (20) is positioned near the tip of the tooth (16).

5. Dispenser head (14) according to any one of the preceding claims, **characterized in that** the fastening means consist of a screw thread (36) and are designed to interact with a corresponding screw thread provided on a neck of the container (12).

6. Assembly for packaging and applying a cosmetic product, **characterized in that** it comprises a container (12) having a dispenser head (14) according to any one of Claims 1 to 5.

7. Mould (40) for moulding a dispenser head (14) according to Claims 1 to 5, **characterized in that** it comprises:
- a female component (42) which comprises:
• a first portion (44) designed to form, at least partially, the fastening means,
• at least one second portion (46, 48) extending from the first portion (44) and designed to form at least one tooth (16, 22);
- a male component (43) forming a core, a first part (56) of which is received with clearance in the first portion (44) of the female component so as to form the fastening means, and at least one second part (58) of which is received with clearance in the second portion (48) of the female component so as to form the longitudinal channel (28) of a hollow tooth (16), the second part (58) of the male component (43) and the second portion (48) of the female component being shaped in such a way as to interact to form the groove (26) and the outlet orifice (20) of a hollow tooth (16).

8. Mould (40) according to the preceding claim, **characterized in that**:
- at least one internal lateral flank (50) of a second portion (48) of the female component comprises a longitudinally oriented boss (52) projecting inside the second portion (48) of the female component and extending longitudinally between an intermediate part of the second portion (48) of the female component and its end (54) so as to form the groove (26) and part of an outlet orifice (20) of a hollow tooth (16),
- one end (60) of a second part (58) of the male component (43) associated with said second portion (48) of the female component is designed to coincide without clearance with the end (62) of the boss (52) located in the intermediate part of said second portion (48) of the female component (42) so as to form the other part of the outlet orifice (20) of said hollow tooth (16).

9. Mould (40) according to either of Claims 7 or 8, for moulding a dispenser head (14) for applying a cosmetic product according to Claims 1 to 5, **characterized in that**:
- the female component (42) comprises:
• two end second portions (46) extending from the first portion (44) of the female component, which are designed to form the solid end teeth (22) of the dispenser head (14), and
• at least one intermediate second portion (48), positioned between the end second portions (46) of the female component, extending from the first portion (44) of the female component, which is designed to form at least one hollow intermediate tooth (16), whose facing internal lateral flanks (50) comprise bosses (52) for forming two opposite grooves (26) and part of two opposite outlet orifices (20) of said intermediate hollow tooth (16),
- and **in that** one end (60) of each second part (58) of the male component (43) associated with an intermediate second portion (48) of the female component is designed to fit without clearance between the ends (62) of the bosses (52) located in the intermediate part of each intermediate second portion (48) of the female component (42) so as to form the other part of the orifices (20) of said intermediate hollow tooth (16).

10. Mould (40) according to either of Claims 8 or 9, **characterized in that** the section of each boss (52), taken in a plane (P) perpendicular to the longitudinal direction of the associated second portion (48) of the female component, is constant, or alternatively is minimal near its end (62) located in the intermediate part of each second portion (48) of the female component, to allow the associated hollow tooth (16) to be demoulded.

11. Mould (40) according to one of Claims 7 to 10, **characterized in that** the female component (42) and the male component (43) each comprise centring means designed to interact with one another when the mould (40) is assembled.

12. Mould (40) according to the preceding claim, **characterized in that** the centring means comprise at least three longitudinally oriented guide columns which are integral with either of the male/female components (42, 43), and on which the other female/male component (42, 43) can slide when the mould (40) is assembled.

13. Method of moulding a dispenser head (14) according to Claims 1 to 5 using a mould (40) according to either of Claims 7 and 8, **characterized in that** it comprises:
- a first step in which the female component (42) is fitted over the male component (43),
- a second step in which a polymer is injected between the female and male components (42, 43),
- a third step of polymerization of the polymer,
- a fourth step in which the female component (42) is removed from the male component (43) and in which the dispenser head (14) is ejected from the mould (40).

14. Dispenser head (14) designed to be fitted to a container (12) containing a product to be applied to the hair, said head comprising:
a) means for fastening the head (14) on the container (12);
b) an arrangement of at least two teeth (16, 22) disposed in at least one row comprising first and second end teeth (22), at least one of the intermediate teeth (16) positioned between said first and second end teeth (22) being passed through by a longitudinal channel (28) able to communicate with the product contained in the container (12), said channel (28) emerging laterally via at least one outlet orifice (20) facing at least one adjacent tooth (16, 22), said tooth comprising a groove (26) running longitudinally along said tooth (16), the groove (26) comprising a first end and a second end located at the tip of said tooth (16), **characterized in that** the orifice (20) emerges in a groove at its first end, and **in that** the first and second end teeth are provided with outlet orifices, these orifices not being provided on the outer flanks of these end teeth.

## Patentansprüche

1. Applikatoraufsatz (14), der dafür vorgesehen ist, auf einem Behälter (12) montiert zu werden, der ein auf die Haare aufzutragendes Produkt enthält, wobei der Aufsatz umfasst:
a) Mittel, die zur Befestigung des Aufsatzes (14) auf dem Behälter (12) vorgesehen sind;
b) eine Anordnung von mindestens zwei Zinken (16, 22), die in mindestens einer Reihe angeordnet sind, die einen ersten und einen zweiten Endzinken (22) umfasst, wobei mindestens ein Zwischenzinken (16), der zwischen dem ersten und dem zweiten Endzinken (22) angeordnet ist, von einem Längskanal (28) durchquert wird, der mit dem Produkt, das in dem Behälter (12) enthalten ist, in Verbindung treten kann, wobei der Kanal (28) seitlich durch mindestens eine Austrittsöffnung (20) mündet, die in Richtung mindestens eines benachbarten Zinken (16, 22) ausgerichtet ist, wobei der Zinken eine Rille (26) aufweist, die sich längs zu dem Zinken (16) erstreckt, wobei die Rille (26) ein erstes Ende und ein zweites Ende aufweist, das sich am freien Ende des Zinken (16) befindet, **dadurch gekennzeichnet, dass** die Öffnung (20) in eine Rille in Höhe ihres ersten Endes mündet und dass ausschließlich der erste und der zweite Endzinken keine Austrittsöffnung aufweisen.

2. Applikatoraufsatz nach Anspruch 1, **dadurch gekennzeichnet, dass** der Zwischenzinken (oder die Zwischenzinken) (16) von einem Längskanal (28) durchquert wird (werden), der durch zwei Austrittsöffnungen (20) mündet, die einander entgegengesetzt ausgerichtet sind.

3. Applikatoraufsatz (14) nach einem der vorhergehenden Ansprüche, **dadurch gekennzeichnet, dass** die Endzinken (22) massiv sind.

4. Applikatoraufsatz (14) nach einem der vorhergehenden Ansprüche, **dadurch gekennzeichnet, dass** die Austrittsöffnung (20) in der Nähe des freien Endes des Zinkens (16) angeordnet ist.

5. Applikatoraufsatz (14) nach einem der vorhergehenden Ansprüche, **dadurch gekennzeichnet, dass** die Befestigungsmittel aus einem Gewinde (36) bestehen und dazu bestimmt sind, mit einem entsprechenden Gewinde zusammenzuwirken, das auf einem Hals des Behälters (12) vorgesehen ist.

6. Einheit zum Verpacken und Auftragen eines kosmetischen Produkts, **dadurch gekennzeichnet, dass** sie einen Behälter (12) umfasst, der mit einem Applikatoraufsatz (14) nach einem der Ansprüche 1 bis 5 ausgestattet ist.

7. Formwerkzeug (40) zum Formen eines Applikatoraufsatzes (14) nach den Ansprüchen 1 bis 5, **dadurch gekennzeichnet, dass** es umfasst:
- ein Aufnahmeelement (42), das aufweist:
• einen ersten Abschnitt (44), der dazu bestimmt ist, mindestens teilweise die Befestigungsmittel zu formen,
• mindestens einen zweiten Abschnitt (46, 48), der sich ausgehend vom ersten Abschnitt (44) erstreckt und dazu bestimmt ist, mindestens einen Zinken (16, 22) zu formen,
- ein einen Kern formendes Einsteckelement (43), von dem ein erster Teil (56) mit Spiel im ersten Abschnitt (44) des Aufnahmeelements aufgenommen wird, um die Befestigungsmittel zu formen, und von dem mindestens ein zweiter Teil (58) mit Spiel im zweiten Abschnitt (48) des Aufnahmeelements aufgenommen wird, um den Längskanal (28) eines hohlen Zinken (16) zu formen, wobei der zweite Teil (58) des Einsteckelements (43) und der zweite Abschnitt (48) des Aufnahmeelements so gestaltet sind, dass sie zusammenwirken, um die Rille (26) und die Austrittsöffnung (20) eines hohlen Zinken zu formen.

8. Formwerkzeug (40) nach dem vorhergehenden Anspruch,
**dadurch gekennzeichnet, dass**:
- mindestens eine innere Seitenflanke (50) eines zweiten Abschnitts (48) des Aufnahmeelements eine längs ausgerichtete Wölbung (52) aufweist, die ins Innere des zweiten Abschnitts (48) des Aufnahmeelements vorsteht und sich in Längsrichtung zwischen einem Zwischenteil des zweiten Abschnitts (48) des Aufnahmeelements und seinem Ende (54) erstreckt, um die Rille (26) und einen Teil einer Austrittsöffnung (20) eines hohlen Zinken (16) zu formen,
- ein Ende (60) eines zweiten Teils (58) des Einsteckelements (43), der dem zweiten Abschnitt (48) des Aufnahmeelements zugeordnet ist, dazu bestimmt ist, ohne Spiel mit dem Ende (62) der Wölbung (52) zusammenzufallen, das sich im Zwischenteil des zweiten Abschnitts (48) des Aufnahmeelements (42) befindet, um den anderen Teil der Austrittsöffnung (20) des hohlen Zinken (16) zu formen.

9. Formwerkzeug (40) nach einem der Ansprüche 7 oder 8 zum Formen eines Applikatoraufsatzes (14) zum Auftragen eines kosmetischen Produkts nach den Ansprüchen 1 bis 5, **dadurch gekennzeichnet, dass**:
- das Aufnahmeelement (42) aufweist:
• zwei zweite Endabschnitte (46), die sich ausgehend vom ersten Abschnitt (44) des Aufnahmeelements erstrecken und dazu bestimmt sind, die massiven Endzinken (22) des Applikatoraufsatzes (14) zu formen, und
• mindestens einen zwischen den beiden Endabschnitten (46) des Aufnahmeelements ausgebildeten zweiten Zwischenabschnitt (48), der sich ausgehend vom ersten Abschnitt (44) des Aufnahmeelements erstreckt, der dazu bestimmt ist, mindestens einen hohlen Zwischenzinken (16) zu formen, dessen einander gegenüberliegenden inneren Seitenflanken (50) Wölbungen (52) aufweisen, um zwei einander gegenüberliegende Rillen (26) und einen Teil von zwei einander gegenüberliegenden Austrittsöffnungen (20) des hohlen Zwischenzinkens (16) zu formen,
- und dass ein Ende (60) jedes zweiten Teils (58) des Einsteckelements (43), der einem zweiten Zwischenabschnitt (48) des Aufnahmeelements zugeordnet ist, dazu bestimmt ist, sich ohne Spiel zwischen die Enden (62) der Wölbungen (52) einzufügen, die sich im Zwischenteil jedes zweiten Zwischenabschnitts (48) des Aufnahmeelements (42) befinden, um den anderen Teil der Öffnungen (20) des hohlen Zwischenzinkens (16) zu formen.

10. Formwerkzeug (40) nach einem der Ansprüche 8 oder 9, **dadurch gekennzeichnet, dass** der Querschnitt jeder Wölbung (52), gesehen in einer Ebene (P) senkrecht zur Längsrichtung des dem Aufnahmeelement zugeordneten zweiten Abschnitts (48), konstant oder in der Nähe seines Endes (62) minimal ist, das sich im Zwischenteil jedes zweiten Abschnitts (48) des Aufnahmeelements befindet, um das Ausformen des zugeordneten hohlen Zinkens (16) zu ermöglichen.

11. Formwerkzeug (40) nach einem der Ansprüche 7 bis 10, **dadurch gekennzeichnet, dass** das Aufnahmeelement (42) und das Einsteckelement (43) jeweils Zentriermittel aufweisen, die dazu bestimmt sind, beim Zusammenbau des Formwerkzeugs (40) zusammenzuwirken.

12. Formwerkzeug (40) nach dem vorhergehenden Anspruch,
**dadurch gekennzeichnet, dass** die Zentriermittel mindestens drei Führungssäulen mit Längsausrichtung aufweisen, die mit einem der Elemente, dem Einsteck- oder dem Aufnahmeelement (42, 43), fest verbunden sind und auf denen das andere Einsteck-/Aufnahmeelement (42, 43) beim Zusammenbau des Formwerkzeugs (40) gleiten kann.

13. Verfahren zum Formen eines Applikatoraufsatzes (14) nach den Ansprüchen 1 bis 5 mit Hilfe eines Formwerkzeugs (40) nach einem der Ansprüche 7 bis 8, **dadurch gekennzeichnet, dass** es aufweist:
- einen ersten Schritt, während dem das Aufnahmeelement (42) auf das Einsteckelement (43) aufgeschoben wird,
- einen zweiten Schritt, während dem ein Polymermaterial zwischen das Aufnahme- und das Einsteckelement (42, 43) injiziert wird,
- einen dritten Schritt der Polymerisierung des Polymermaterials,
- einen vierten Schritt, während dem das Aufnahmeelement (42) vom Einsteckelement (43) abgezogen wird und während dem der Applikatoraufsatz (14) aus dem Formwerkzeug (40) ausgeworfen wird.

14. Applikatoraufsatz (14), der dafür vorgesehen ist, auf einem Behälter (12) montiert zu werden, der ein auf die Haare auszutragendes Produkt enthält, wobei der Aufsatz umfasst:
a) Mittel, die zur Befestigung des Aufsatzes (14) auf dem Behälter (12) vorgesehen sind;
b) eine Anordnung von mindestens zwei Zinken (16, 22), die in mindestens einer Reihe angeordnet sind, die einen ersten und einen zweiten Endzinken (22) umfasst, wobei mindestens ein Zwischenzinken (16), der zwischen dem ersten und dem zweiten Endzinken (22) angeordnet ist, von einem Längskanal (28) durchquert wird, der mit dem Produkt, das in dem Behälter (12) enthalten ist, in Verbindung treten kann, wobei der Kanal (28) seitlich über mindestens eine Austrittsöffnung (20) mündet, die in Richtung mindestens eines benachbarten Zinken (16, 22) ausgerichtet ist, wobei der Zinken eine Rille (26) aufweist, die sich längs zu dem Zinken (16) erstreckt, wobei die Rille (26) ein erstes Ende und ein zweites Ende aufweist, das sich am freien Ende des Zinken (16) befindet, **dadurch gekennzeichnet, dass** die Öffnung (20) in eine Rille in Höhe ihres ersten Endes mündet und dass der erste und der zweite Endzinken mit einer Austrittsöffnung ausgestattet sind, wobei diese Öffnungen nicht auf den äußeren Flanken dieser Endzinken vorhanden sind.
